# EUROPÄISCHE PATENTANMELDUNG

(11) **EP 2 653 310 A2**
(43) Veröffentlichungstag der Anmeldung: **23.10.2013**
(21) Anmeldenummer: 13164344.7
(22) Anmeldetag: 18.04.2013
(51) Int. Cl.: B41F 13/20

(54) **Wälzlageranordnung einer Druckmaschine**

(30) Priorität: 18.04.2012 DE 102012206380
(71) Anmelder: Aktiebolaget SKF, 41550 Göteborg (SE)
(72) Erfinder: Forster, Thomas, 3340 Waidhofen (AT); Friedl, Wolfgang, 4400 Steyr (AT); Huber, Johann, 3352 St. Peter/Au (AT)
(74) Vertreter: Schonecke, Mitja

(57) **Zusammenfassung**

Die Erfindung betrifft eine Wälzlageranordnung (1) einer Druckmaschine, umfassend mindestens ein Radiallager (2, 3) und mindestens zwei Axiallager (4, 5), um ein rotierendes Bauteil (6) relativ zu einem Gehäuse (7) radial und in beiden axialen Richtungen zu lagern. Um bei einer solchen Wälzlageranordnung ein verbessertes Abrollverhalten bei kompakterer Bauweise zu ermöglichen, ist es vorgesehen, dass das mindestens eine Radiallager (2, 3) als Zylinderrollenlager und die beiden Axiallager (4, 5) als Rillenkugellager ausgebildet sind, wobei die Wälzlageranordnung (1) als vormontierte und verschraubte Einheit ausgebildet ist.

## Beschreibung

Die Erfindung betrifft eine Wälzlageranordnung für eine Druckmaschine, umfassend mindestens ein Radiallager und mindestens zwei Axiallager, um ein rotierendes Bauteil relativ zu einem Gehäuse radial und in beiden axialen Richtungen zu lagern, wobei das mindestens eine Radiallager als Zylinderrollenlager und die beiden Axiallager als Rillenkugellager ausgebildet sind und wobei die Wälzlageranordnung als vormontierte und verschraubte Einheit ausgebildet ist.

Eine solche Lageranordnung offenbart die US 6 817 291 B2, wobei drei Zylinderrollenlager für die radiale Lagerung und zwei nebeneinander eingebaute Schrägkugellager für die axiale Lagerung eingesetzt werden. Eine andere Lösung zeigt die DE 10 2008 036 223 A1, bei der ein Zylinderrollenlager und ein Vier-Punkt-Kugellager zum Einsatz kommen.

Eine Wälzlageranordnung ähnlicher Art zur Anwendung in einer Druckmaschine ist aus der EP 0 586 863 B1 bekannt. Sowohl zur radialen als auch zur axialen Lagerung einer Welle in einem Gehäuse der Druckmaschine kommen insgesamt vier Zylinderrollenlager zum Einsatz. Die Achsen der Zylinderrollen, mit denen die beidseitige axiale Lagerung hergestellt wird, sind radial ausgerichtet; die Zylinderrollen laufen demgemäß auf Kreisbahnen um die Achse der zu lagernden Welle um. Eine solche Lagerung kommt insbesondere bei der Lagerung eines Druckzylinders in einer Druckmaschine zum Einsatz. Mithin ist eine getrennte axiale und radiale Lagerung durch jeweilige separate Lager vorgesehen.

Es hat sich herausgestellt, dass eine solche Lagerung unter dem Gesichtspunkt der Präzision und Reibungsarmut noch verbesserungsbedürftig ist. Die kinematische Situation beim Einsatz eines axial wirkenden Zylinderrollenlagers bedingt aufgrund des gegebenen Abrollverhaltens eine gewisse Wärmeentwicklung, die hinsichtlich der Genauigkeit störend sein kann.

Des weiteren benötigt die vorbekannte Lagerung einen gewissen Bauraum, der nicht immer problemlos zur Verfügung steht. Demgemäß muss eine entsprechende Konstruktion vorgesehen werden, um der Lageranordnung einen hinreichenden Bauraum zur Verfügung stellen zu können.

Der Erfindung liegt die Aufgabe e zugrunde, eine Lageranordnung der eingangs genannten Art zum Einsatz in einer Druckmaschine zur Verfügung zu stellen, die sich durch ein verbessertes Abrollverhalten insbesondere der Axiallager auszeichnet, wobei weiterhin eine besonders kompakte und somit platzsparende Bauweise ermöglicht werden soll. Die Lageranordnung soll weiterhin einfach aufgebaut und preiswert herstellbar sein.

Die Lösung dieser Aufgabe durch die Erfindung ist dadurch gekennzeichnet, dass der Lageraußenring des mindestens einen Zylinderrollenlagers mit einem nicht rotierenden Lagerring des Axiallagers verbunden ist, wobei der nicht rotierende Lagerring des Axiallagers als Scheibe ausgebildet ist, die in beiden Stirnseiten je eine Laufbahn für die Kugeln des Axiallagers aufweist.

In diesem Falle ist bevorzugt vorgesehen, dass der als Scheibe ausgebildete Lagerring der beiden Rillenkugellager mit einem Flansch verschraubt ist, der am einen axialen Endbereich des Lageraußenrings des mindestens einen Zylinderrollenlagers angeordnet ist. Die der am Flansch anliegenden Stirnseite gegenüberliegende Stirnseite des Lagerrings der beiden Rillenkugellager bildet dabei vorzugsweise das axiale Ende des nicht rotierenden Teils der Wälzlageranordnung.

Es können zwei oder mehr Zylinderrollenlagers benachbart zueinander angeordnet sein, wobei alle Zylinderrollenlager einen gemeinsamen Lageraußenring und einen gemeinsamen Lagerinnenring aufweisen.

Die beiden Axiallager weisen bevorzugt zwei voneinander axial beabstandete rotierende Ringe mit Laufbahnen für die Kugeln der Axiallager auf, zwischen denen der nicht rotierende Lagerring des Axiallagers angeordnet ist. Die beiden voneinander axial beabstandeten Ringe können dabei durch eine Abstandshülse auf Abstand gehalten werden.

Der Lagerinnenring des mindestens einen Zylinderrollenlagers, die beiden rotierende Ringe der Axiallager und die Abstandshülse sind dabei vorzugsweise miteinander verschraubt.

Die Zylinderrollen des mindestens einen Zylinderrollenlagers und die Kugeln der beiden Rillenkugellager sind bevorzugt im wesentlichen auf demselben Durchmesser angeordnet. Hierdurch ist eine Optimierung, d. h. Minimierung der Reibung im Lager möglich.

Die Wälzlageranordnung ist vor der Montage in das Gehäuse vorzugsweise auf einer Montagehülse angeordnet.

Die Erfindung schlägt also eine Kombination von radial wirkenden Zylinderrollenlagern mit axial wirkenden Kugellagern vor. Das Axiallager ist in der oben genannten Weise bevorzugt als doppelseitig wirkendes Axiallager ausgebildet. Die kombinierten Axial- und Radiallager werden miteinander verschraubt und bilden so eine einfach montierbare Einheit. Diese wird im komplett vormontierten Zustand mit präzise eingestellter axialer und radialer Lagerluft an die Druckmaschinen gebracht und hier, ohne demontiert zu werden, eingebaut.

Sehr vorteilhaft ist ein relativ kleiner Bauraum, den die Lageranordnung einnimmt. Demgemäß ist auch das Gewicht der Lageranordnung relativ gering. Infolge der günstigeren Reibungsverhältnisse ergeben sich ein verbessertes Abrollverhalten und ein geringerer Verschleiß. Hieraus resultiert des weiteren eine niedrigere Betriebstemperatur der Lageranordnung, was wiederum zu einer präziseren Lagerung führt. Der Aufbau der Lageranordnung ist relativ einfach, so dass die Herstellung der Anordnung preiswert möglich ist.

In der Zeichnung ist ein Ausführungsbeispiel der Erfindung dargestellt. Es zeigen:
- Fig. 1: den Radialschnitt durch einen Teil einer Druckmaschine, und zwar die Lagerung eines Druckzylinders in einem Maschinengehäuse, wobei der Druckzylinder mittels einer Lageranordnung gelagert ist, und
- Fig. 2: den Radialschnitt durch die Lageranordnung gemäß Fig. 1 mit einer Montagehülse.

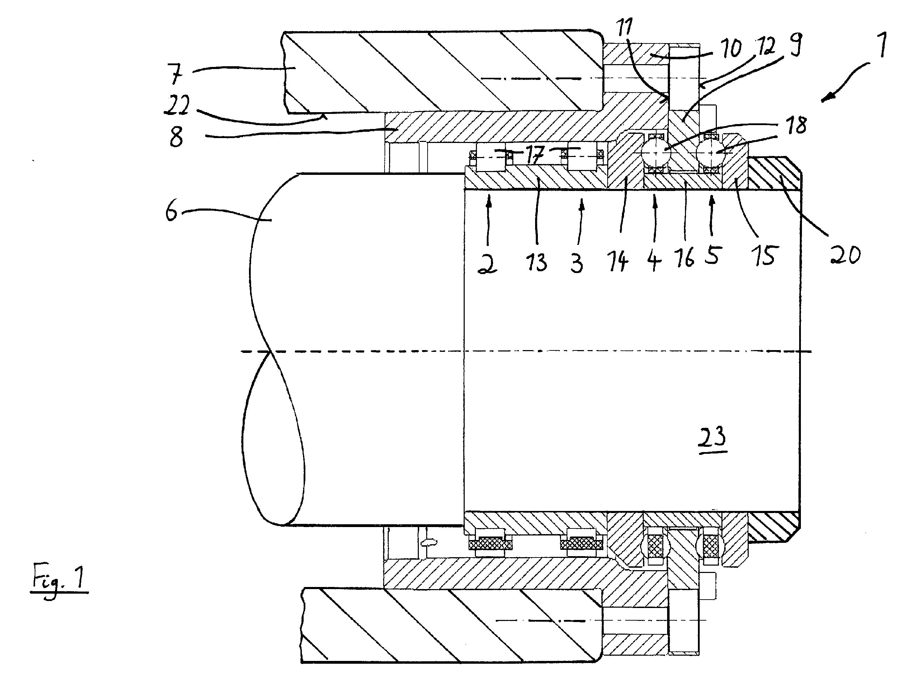

In Fig. 1 ist ein Teil einer Druckmaschine dargestellt, nämlich ein Abschnitt eines Gehäuses 7, in dem ein rotierendes Bauteil 6 in Form einer Welle gelagert ist. Für die Lagerung der Welle 6 im Gehäuse 7 ist eine Wälzlageranordnung 1 vorgesehen. Die Wälzlageranordnung 1 umfasst zwei Radiallager und zwei Axiallager. Die beiden Radiallager 2 und 3 sind als Zylinderrollenlager ausgebildet. Die beiden Axiallager 4 und 5 sind als Rillenkugellager ausgeführt.

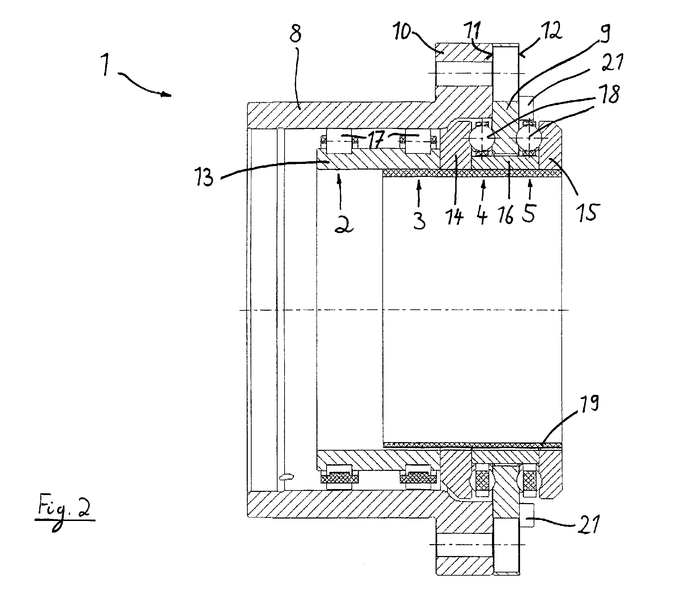

Die Lageranordnung 1 ist als vormontierte Einheit ausgebildet (s. hierzu Fig. 2), in der die Lagerluft bereits eingestellt ist und so eine direkt montierbare Einheit vorliegt.

Die beiden Zylinderrollenlager 2, 3 haben sowohl einen gemeinsamen Lageraußenring 8 als auch einen gemeinsamen Lagerinnenring 13. Es sind zwei Reihen Zylinderrollen 17 nebeneinander angeordnet.

Die beiden Axiallager 4, 5 werden zunächst durch zwei rotierende Ringe 14 und 15 gebildet, die an den einander zugewandten Stirnseiten mit je einer Laufbahn für Kugeln 18 versehen sind. Die beiden Ringe 14, 15 werden durch eine Abstandshülse 16 auf definiertem axialen Abstand gehalten. Zwischen den beiden Ringen 14, 15 ist ein nicht rotierender Lagerring 9 vorgesehen, der in seinen beiden Stirnseiten 11 und 12 jeweils eine Laufbahn für die Kugeln 18 aufweist.

Der Lageraußenring 8 der beiden Zylinderrollenlager ist mit einem Flansch 10 versehen, der an einem axialen Ende des Lageraußenrings 8 vorgesehen ist und der sich radial nach außen erstreckt. Am axialen Ende des Flansches 10 liegt der Lagerring 9 der Axiallager mit seiner Stirnseite 11 an. Der Lagerring 9 der Axiallager ist mit dem Flansch 10 und somit mit dem Lageraußenring 8 der Zylinderrollenlager 2, 3 verschraubt (s. angedeutete Schrauben 21).

Der Lagerinnenring 13 der Zylinderrollenlager, die Ringe 14 und 15 sowie die Abstandshülse 16 sind gleichermaßen miteinander verschraubt (die Schrauben sind nicht dargestellt), so dass insgesamt eine fest verbaute Einheit gegeben ist, in der sowohl die axiale als auch die radiale Lagerluft bereits eingestellt ist. Demgemäß kann die entstandene Einheit als Ganzes in das Gehäuse 7 eingebaut werden.

Hierzu ist in Fig. 2 angedeutet, dass in die innere Bohrung der Lageranordnung 1 eine Montagehülse 19 eingeschoben sein kann. Nachdem der Lageraußenring 8 mit seiner radial außenliegenden zylindrischen Fläche in die Aufnahmebohrung 22 im Gehäuse 7 eingeschoben ist, kann der Wellenzapfen 23 in die innere Bohrung der Lageranordnung 1 eingeschoben werden, wodurch die Montagehülse 19 axial aus der Lageranordnung herausgeschoben wird. Die Festlegung der Welle 6 in der Lageranordnung 1 erfolgt in bekannter Weise mittels einer Befestigungsmutter 20.

### Bezugszeichenliste

| | |
|---|---|
| 1 | Wälzlageranordnung |
| 2 | Radiallager (Zylinderrollenlager) |
| 3 | Radiallager (Zylinderrollenlager) |
| 4 | Axiallager (Rillenkugellager) |
| 5 | Axiallager (Rillenkugellager) |
| 6 | rotierendes Bauteil (Welle) |
| 7 | Gehäuse |
| 8 | Lageraußenring der Zylinderrollenlager |
| 9 | nicht rotierender Lagerring der Axiallager |
| 10 | Flansch |
| 11 | Stirnseite |
| 12 | Stirnseite |
| 13 | Lagerinnenring der Zylinderrollenlager |
| 14 | rotierender Ring des Rillenkugellagers |
| 15 | rotierender Ring des Rillenkugellagers |
| 16 | Abstandshülse |
| 17 | Zylinderrolle |
| 18 | Kugel |
| 19 | Montagehülse |
| 20 | Befestigungsmutter |
| 21 | Schraube |
| 22 | Aufnahmebohrung |
| 23 | Wellenzapfen |

## Patentansprüche

1. Wälzlageranordnung (1) für eine Druckmaschine, umfassend mindestens ein Radiallager (2, 3) und mindestens zwei Axiallager (4, 5), um ein rotierendes Bauteil (6) relativ zu einem Gehäuse (7) radial und in beiden axialen Richtungen zu lagern, wobei das mindestens eine Radiallager (2, 3) als Zylinderrollenlager und die beiden Axiallager (4, 5) als Rillenkugellager ausgebildet sind, wobei die Wälzlageranordnung (1) als vormontierte und verschraubte Einheit ausgebildet ist, **dadurch gekennzeichnet, dass** der Lageraußenring (8) des mindestens einen Zylinderrollenlagers (2, 3) mit einem nicht rotierenden Lagerring (9) des Axiallagers (4, 5) verbunden ist, wobei der nicht rotierende Lagerring (9) des Axiallagers (4, 5) als Scheibe ausgebildet ist, die in beiden Stirnseiten je eine Laufbahn für die Kugeln des Axiallagers (4, 5) aufweist.

2. Wälzlageranordnung nach Anspruch 1, **dadurch gekennzeichnet, dass** der als Scheibe ausgebildete Lagerring (9) der beiden Rillenkugellager (4, 5) mit einem Flansch (10) verschraubt ist, der am einen axialen Endbereich des Lageraußenrings (8) des mindestens einen Zylinderrollenlagers (2, 3) angeordnet ist.

3. Wälzlageranordnung nach Anspruch 2, **dadurch gekennzeichnet, dass** die der am Flansch (10) anliegenden Stirnseite (11) gegenüberliegende Stirnseite (12) des Lagerrings (9) der beiden Rillenkugellager (4, 5) das axiale Ende des nicht rotierenden Teils der Wälzlageranordnung (1) bildet.

4. Wälzlageranordnung nach einem der Ansprüche 1 bis 3, **dadurch gekennzeichnet, dass** zwei oder mehr Zylinderrollenlagers (2, 3) benachbart zueinander angeordnet sind, wobei alle Zylinderrollenlager (2, 3) einen gemeinsamen Lageraußenring (8) und einen gemeinsamen Lagerinnenring (13) aufweisen.

5. Wälzlageranordnung nach einem der Ansprüche 1 bis 4, **dadurch gekennzeichnet, dass** die beiden Axiallager (4, 5) zwei voneinander axial beabstandete rotierende Ringe (14, 15) mit Laufbahnen für die Kugeln der Axiallager (4, 5) aufweisen, zwischen denen der nicht rotierende Lagerring (9) des Axiallagers (4, 5) angeordnet ist.

6. Wälzlageranordnung nach Anspruch 5, **dadurch gekennzeichnet, dass** die beiden voneinander axial beabstandeten Ringe (14, 15) durch eine Abstandshülse (16) auf Abstand gehalten werden.

7. Wälzlageranordnung nach Anspruch 6, **dadurch gekennzeichnet, dass** der Lagerinnenring (13) des mindestens einen Zylinderrollenlagers (2, 3), die beiden rotierende Ringe (14, 15) der Axiallager (4, 5) und die Abstandshülse (16) miteinander verschraubt sind.

8. Wälzlageranordnung nach einem der Ansprüche 1 bis 7, **dadurch gekennzeichnet, dass** die Zylinderrollen (17) des mindestens einen Zylinderrollenlagers (2, 3) und die Kugeln (18) der beiden Rillenkugellager (4, 5) im wesentlichen auf demselben Durchmesser angeordnet sind.

9. Wälzlageranordnung nach einem der Ansprüche 1 bis 8, **dadurch gekennzeichnet, dass** die Wälzlageranordnung (1) vor der Montage in das Gehäuse (7) auf einer Montagehülse (19) angeordnet ist.
